(19) Europäisches Patentamt
European Patent Office
Office européen des brevets

(11) **EP 1 883 248 A2**

(12) **EUROPEAN PATENT APPLICATION**

(43) Date of publication:
**30.01.2008 Bulletin 2008/05**

(51) Int Cl.:
**H04N 9/04** *(2006.01)*

(21) Application number: **07113015.7**

(22) Date of filing: **24.07.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **24.07.2006 KR 20060069161**

(71) Applicant: **Samsung Electronics Co., Ltd.**
**Suwon-si, Gyeonggi-Do (KR)**

(72) Inventors:
• **OH, Sang-Wook,**
c/o Samsung Electronics Co., Ltd.
**Gyeonggi-do (KR)**
• **CHO, Sung-Dae,**
c/o Samsung Electronics Co., Ltd.
**Gyeonggi-do (KR)**

(74) Representative: **Grünecker, Kinkeldey,**
**Stockmair & Schwanhäusser**
**Anwaltssozietät**
**Maximilianstrasse 58**
**80538 München (DE)**

(54) **Method and apparatus for color interpolation in digital photographing device**

(57)     Disclosed is an apparatus and method for color interpolation in a digital photographing device, the apparatus comprising an optical unit including a lens and a lens adjuster so as to receive an optical signal, an image sensor installed to be movable in a predetermined direction, wherein the image sensor converts the optical signal input through the optical unit into a digital signal, in order to obtain raw data based on a unit of a frame, the raw data including color information about one color of each pixel according to a color filter array (CFA) of a predetermined format, a buffer for storing the raw data obtained by the image sensor a sensor movement controller for controlling a movement state and a movement distance of the image sensor so as to obtain at least two frames of raw data, one of which has an offset from one image through the image sensor, when said one image is photographed, a sensor movement driving unit for moving the image sensor under a control of the sensor movement controller and an image processing unit for converting said at least two frames of raw data stored in the buffer into image data, which have a plurality of pieces of color information predetermined to enable expression of an original color for each pixel, by using color interpolation.

FIG.3

EP 1 883 248 A2

Printed by Jouve, 75001 PARIS (FR)

**Description**

**BACKGROUND OF THE INVENTION**

1. Field of the Invention

The present invention relates to a technology for obtaining a color imaging and more particularly to a color interpolation method and apparatus for interpolating color values by using a plurality of frames.

2. Description of the Related Art

In general, digital photographing devices such as digital cameras and camcorders use image sensors, such as a charge-coupled device (CCD) or CMOS imaging sensor (CIS), instead of film. Each of the CCD and CIS functions to convert a value of brightness, which is applied through a lens to a corresponding sensor for one pixel, into a digital signal. That is, a value of a signal received through an image sensor corresponds to a value of brightness, in which a received image is a black-and-white image, other than a color image seen by human eyes. In order to acquire a color image, it is necessary to obtain red, green, and blue (RGB) values for every pixel by using a sensor on which RGB filters are included. In this case, the reason why the RGB colors are used is that the RGB colors are the three primary colors of light, and also the RGB colors belong to a wavelength band to which the cone cells in human eyes mainly responds.

As described above, in order to obtain a high-quality color image, three times as many CCD or CIS pixels as a black-and-white image are required. Such a sensor is a high-priced device which exerts a large influence on the determination of the price of a camera. Therefore, while professional broadcasting devices use a high-priced 3-CCD, which obtains an original color by receiving each of the R, G, and B colors through three CCDs, there are few personal users having such a sensor due to the high price and additional technology internally-required for the 3-CCD.

An image must include all the information about the three colors (i.e., RGB colors) for each pixel in order to display a color image. However, generally, a camera sensor is constructed such that a color filter array (CFA) is coated on a CCD or CMOS surface so as to selectively obtain a value of one of the RGB colors. Therefore, information about the two missing colors for each pixel is calculated by color interpolation using color information of surrounding pixels.

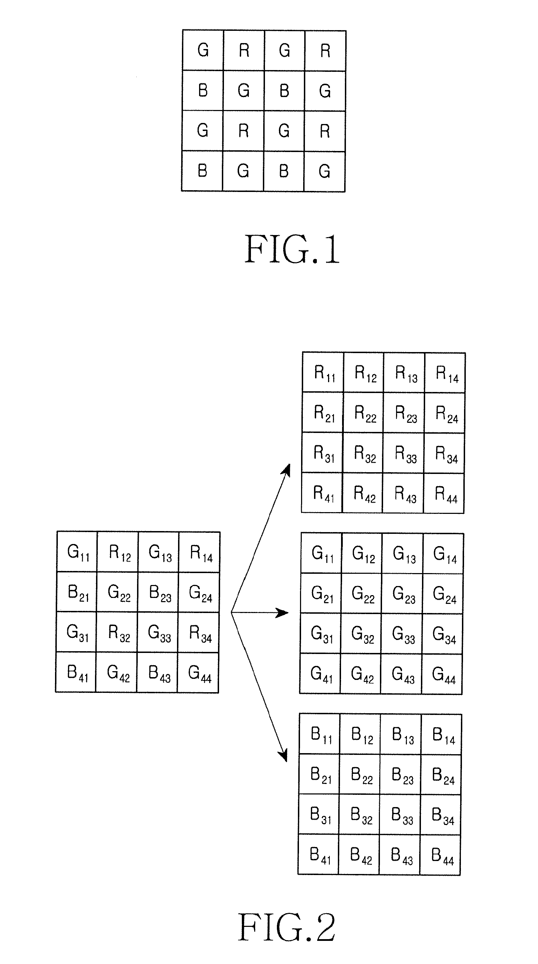

The Bayer format is a format of CFA which has been proposed by Bayer on the basis of the fact that color green ( "G") includes more brightness information than each of colors red ("R") and blue ("B"). FIG. 1 is a view illustrating a Bayer format wherein a single color is obtained for each pixel. Most of current cameraphones including PDA use a single CCD or CMOS because of problems in volume, hardware, etc. A single CCD and a single CMOS chiefly use Bayer RGB or cyan-magenta-yellow-green (CMYG) CFA, which has only one-color information for one pixel. In this proper color interpolation is required in order to acquire a color image.

FIG. 2 is a conceptual view illustrating an example in which Bayer-format data are converted into image data having information about three colors (RGB) for each pixel by using color interpolation. A bilinear color interpolation, which is simple and is widely used from among color interpolations, obtains missing color information by means of the Equation 1. For example, the color associated with pixel "G23" in FIG. 2 is calculated by using the four surrounding "G" colors based on the following Equation 1.

$$G_{23} = \frac{G_{13} + G_{22} + \bar{G}_{24} + G_{33}}{4} \quad \ldots\ldots\ldots\ldots\ldots\ldots\ldots\ldots\ldots\ldots\ldots\ldots (1)$$

Equation 2 is an expression for calculating color "R". For example, red color of pixel 23, ("R23") is calculated by using four surrounding "R" colors nearest to the pixel. Also, each of colors "R33" and "R22" are calculated with reference to two "R" colors nearest to each of colors "G33" and "G22" through the color interpolation based on Equation 2. Equation 3 is an expression for calculating color "B", to which the same principle as that used in Equation 2 is applied.

$$R_{23} = \frac{R_{12} + R_{14} + R_{32} + R_{34}}{4}$$

$$R_{33} = \frac{R_{32} + R_{34}}{2} \qquad \ldots\ldots\ldots\ldots\ldots\ldots\ldots\ldots\ldots\ldots\ldots\ldots\ldots. \quad (2)$$

$$R_{22} = \frac{R_{12} + R_{32}}{2}$$

$$B_{32} = \frac{B_{21} + B_{23} + B_{41} + B_{43}}{4}$$

$$B_{33} = \frac{B_{23} + B_{43}}{2} \qquad \ldots\ldots\ldots\ldots\ldots\ldots\ldots\ldots\ldots\ldots\ldots\ldots\ldots \quad (3)$$

$$B_{22} = \frac{B_{21} + B_{23}}{2}$$

According to the principle of the bilinear color interpolation, an output pixel is assigned with raw pixels nearest to a position appointed as the output pixel. Such a bilinear color interpolation is the simplest method and has a very fast processing speed, but has a disadvantage in that extracting the nearest surrounding pixels, itself, may cause a change in an image. In addition, according to image generation using the conventional color interpolation required pixel values must be found in the input pixels, so that an error may occur. Also, according to the conventional color interpolation, the greater the number of output pixels corresponding to one input pixel, the worse the output image is.

In addition, since the conventional color interpolation method fails to efficiently consider edge information and correlation between colors, a false color error or moire effect may be observed at edges in an interpolation process chiefly due to aliasing.

## SUMMARY OF THE INVENTION

Accordingly, the present invention has been made to solve the above-mentioned problems occurring in the prior art, and an object of the present invention is to provide a method and an apparatus for color interpolation in a digital photographing device, using additional auxiliary image information when calculating or restoring color information of an image, to obtain color values representing actual color values.

To accomplish this object, in accordance with one aspect of the present invention, there is provided an apparatus for color interpolation in a digital photographing device, the apparatus comprising an optical unit including a lens and a lens adjuster so as to receive an optical signal, an image sensor installed to be movable in a predetermined direction, wherein the image sensor converts the optical signal input through the optical unit into a digital signal in order to obtain raw data based on a unit of a frame, the raw data including color information about one color of each pixel according to a color filter array (CFA) of a predetermined format, a buffer for storing the raw data obtained by the image sensor, a sensor movement controller for controlling a movement state and a movement distance of the image sensor so as to obtain at least two frames of raw data, one of which has an offset from one image through the image sensor, when said one image is photographed, a sensor movement driving unit for moving the image sensor under a control of the sensor movement controller and an image processing unit for converting said at least two frames of raw data stored in the buffer into image data, which have a plurality of pieces of color information predetermined to enable expression of an original color for each pixel, by using color interpolation.

In accordance with another aspect of the present invention, there is provided a method for color interpolation in a digital photographing device, the method comprising the steps of acquiring one basic image data and one auxiliary image data which has an offset by a predetermined distance from the basic image data, when the basic image data is acquired, and converting the acquired basic and auxiliary image data into image data, which have a plurality of color information predetermined to enable expression of an original color for each pixel, by performing color interpolation.

## BRIEF DESCRIPTION OF THE DRAWINGS

The above and other objects, features and advantages of the present invention will be more apparent from the following detailed description taken in conjunction with the accompanying drawings, in which:

FIG. 1 a view illustrating the Bayer pattern of a typical color filter array;
FIG. 2 is a conceptual view illustrating an example in which Bayer-format data are converted into image data having information about three colors (RGB) for each pixel by using color interpolation;
FIG. 3 is a block diagram illustrating the construction of a color interpolation apparatus and its related principal components in a digital photographing device according to an embodiment of the present invention;
FIG. 4 is a view illustrating the detailed mechanical structure of the sensor movement driving unit in FIG. 3;
FIG. 5 is a plan view of the driving cam shown in FIG. 4;
FIGs. 6A and 6B are views illustrating location variation states of the image sensor according to rotation of the driving cam shown in FIG. 4;
FIG. 7 is a graph illustrating location variation states of the image sensor according to the rotation of the driving cam shown in FIG. 4;
FIGs. 8A, 8B, 8C, and 8D are conceptual views illustrating spatial relation between image data and arrangement of Bayer-format data, when two sheets of image data have been consecutively acquired according to an embodiment of the present invention;
FIGs. 9A, 9B, and 9C are conceptual views illustrating location of each piece of color information when two sheets of image data have been consecutively acquired according to another embodiment of the present invention;
FIG. 10 is a flowchart illustrating an entire operation for color interpolation in a digital photographing device according to an embodiment of the present invention;
FIG. 11 is a detailed flowchart illustrating a color interpolation operation for color "G" in FIG. 10; and
FIG. 12 is a flowchart illustrating an entire color interpolation operation in a digital photographing device according to another embodiment of the present invention.

## DETAILED DESCRIPTION OF THE PREFERRED EMBODIMENT

Hereinafter, embodiments according to the present invention will be described with reference to the accompanying drawings. In the following description, many particular items such as a detailed component device are shown, but these are given only for providing a better understanding of the present invention. Therefore, it will be understood by those skilled in the art that various changes in form and detail may be made within the scope of the present invention.

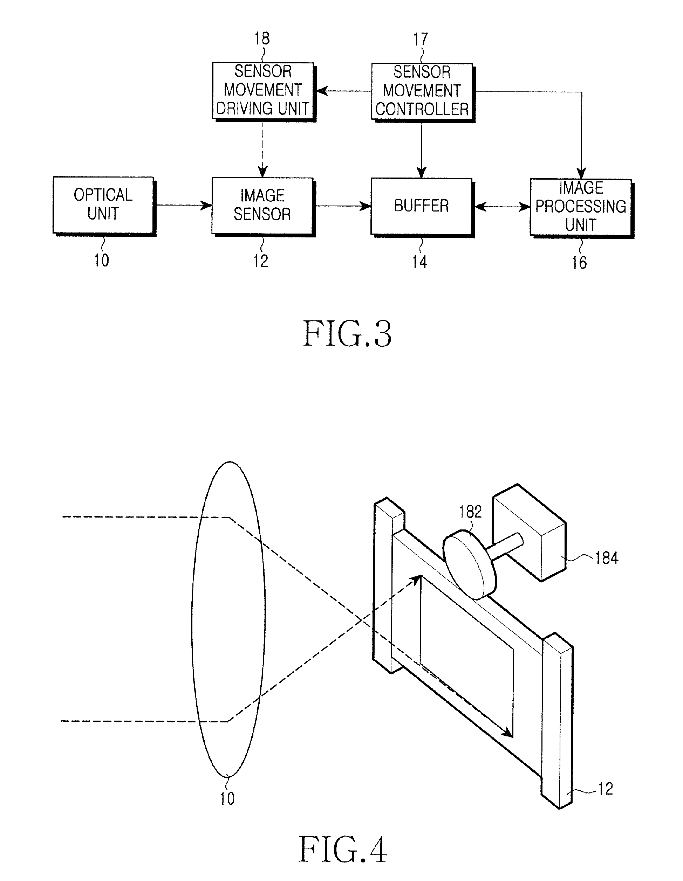

FIG. 3 is a block diagram illustrating the construction of a color interpolation apparatus and its related principal components in a digital photographing device according to an embodiment of the present invention. The color interpolation apparatus includes an optical unit 10, an image sensor 12, an image buffer 14, an image processing unit 16, a sensor movement controller 17, and a sensor movement driving unit 18.

The optical unit 10 functions to transmit an input optical signal of an object to the image sensor 12 in the digital photographing device, and generally includes a lens and a lens adjuster.

The image sensor 12, which takes the place of film in a digital camera or camcorder, converts a value of brightness applied to the image sensor 12 through a lens into a digital signal. Generally, the image sensor 12 is constructed with a charge-coupled device (CCD) or CMOS imaging sensor (CIS). Although there are various schemes for constructing the image sensor 12, the following description will be described with respect to the image sensor 12 constructed based on a color filter array (CFA) scheme, which can obtain one piece of -color information for each pixel. A digital signal obtained by the image sensor 12 corresponds to Bayer-format raw data, which are stored in the buffer 14.

The buffer 14 for storing the Bayer-format raw data obtained by the image sensor 12 may store information of two or more image sheets (i.e., two or more image frames). According to an embodiment of the present invention, movement information or location information of the image sensor 12 are also stored together with the image information upon acquisition of each piece of image data, so that the movement information or location information of the image sensor 12 can be used when the image processing unit 16 restores the color of the image in the future.

The image processing unit 16 performs various image processing operations, one of which is to convert Bayer-format raw data that includes information about the one color for each pixel, that have been stored in the buffer 14, into image data including information with RGB colors for each pixel. Since the image processing unit 16 receives an input signal which includes information regarding one color for each pixel, the image processing unit 16 determines information regarding the two other colors for each pixel by using color interpolation. The image processing unit 16 also performs color interpolation by using movement information of the sensor, which has been stored in the buffer 14. According to the color interpolation in accordance with the principles of the invention, two or more sheets of image data are used to restore the three-color image data in one image sheet. The image data restored by such a manner may be again stored in the buffer 14 or may be output to the outside.

According to the characteristics of the present invention, the sensor movement controller 17 controls the sensor movement driving unit 18 to move the image sensor 12 of a frame in a specific direction, such as the up/down direction and/or the right/left direction, so that a plurality of image data having proper offsets from a specific image can be photographed through the image sensor 12 upon photographing of the specific image. Also, the sensor movement controller 17 controls information about the movement to be stored together with an acquired image data in the buffer 14. In this case, the stored information may include movement information or location information of the image sensor 12. When the dynamic movement of the image sensor 12 corresponds to movement of two or more dimensions, as much information as corresponding directions is output to be stored in the buffer 14.

According to the characteristics of the present invention, the sensor movement driving unit 18 performs a mechanical driving function to move the image sensor 12 in a specific direction. That is, the sensor movement driving unit 18 applies a dynamic movement to the image sensor 12 according to a request of the sensor movement controller 17. In this case, the dynamic movement may be a single or multi- dimensional dynamic movement.

FIG. 4 is a view illustrating the detailed mechanical structure of the sensor movement driving unit 18 and its related function as shown in FIG. 3. The image sensor 12 of a panel shape, which converts an optical signal received through the optical unit 10 into a digital signal, is installed so as to be movable in the up and down directions by means of a mechanical structure such as a guide rail (not shown). The sensor movement driving unit 18 includes an elliptical driving cam 182 which is in tight contact with the upper surface (or lower surface) of the image sensor 12, and a driving motor 184 for rotating the driving cam 182, so as to move the image sensor 12 in the up and down directions. In such a construction, when the driving motor 184 operates, the elliptical driving cam 182 is rotated so that the image sensor 12 can move in the up or down direction. In this case, a spring (not shown) is installed in order to provide elastic force to the image sensor 12 in the upward direction so that one surface of the image sensor 12 can be continuously in tight contact with the driving cam 182.

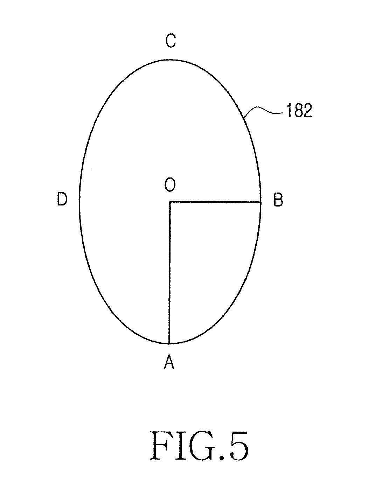

FIG. 5 is a plan view of the driving cam 182 shown in FIG. 4. Since the driving cam 182 has an elliptical shape, a difference in location of the image sensor 12, between when point "A" of the major axis in the driving cam 182 of FIG. 5 is in contact with the image sensor 12 and when point "B" of the minor axis in the driving cam 182 is in contact with the image sensor 12 corresponds to a difference between a first distance from point "O", which is the central point of the ellipse, to point "A" and a second distance from point "O" to point "B". A location variation "K" can be defined by Equation 4 as follows.

$$ K = \overline{AO} - \overline{BO} \quad \dots\dots\dots\dots\dots\dots\dots\dots\dots\dots\dots\dots\dots\dots\dots (4) $$

In Equation 4, $\overline{AO}$" represents the radius of the major axis, and $\overline{BO}$" represents the radius of the minor axis.

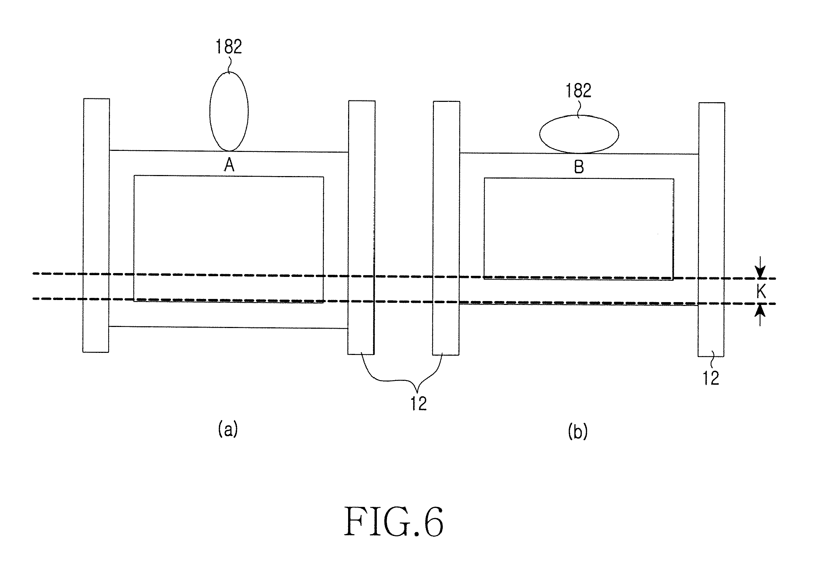

FIGs. 6A and 6B are views illustrating location variation states of the image sensor 12 according to rotation of the driving cam 182 shown in FIG. 4. That is, FIG. 6A shows a state in which a contact surface of the image sensor 12 is in contact with point "A" of the major axis of the driving cam 182, and FIG. 6B shows a state in which the contact surface of the image sensor 12 is in contact with point "B" of the minor axis of the driving cam 182. Referring to FIGs. 6A and 6B, it can be understood that the location variation of the image sensor 12 is generated by "K", which is a radius difference between the major axis and minor axis of the driving cam 182. In this case, "K" may be set to a value corresponding to a distance between pixels of the image sensor 12.

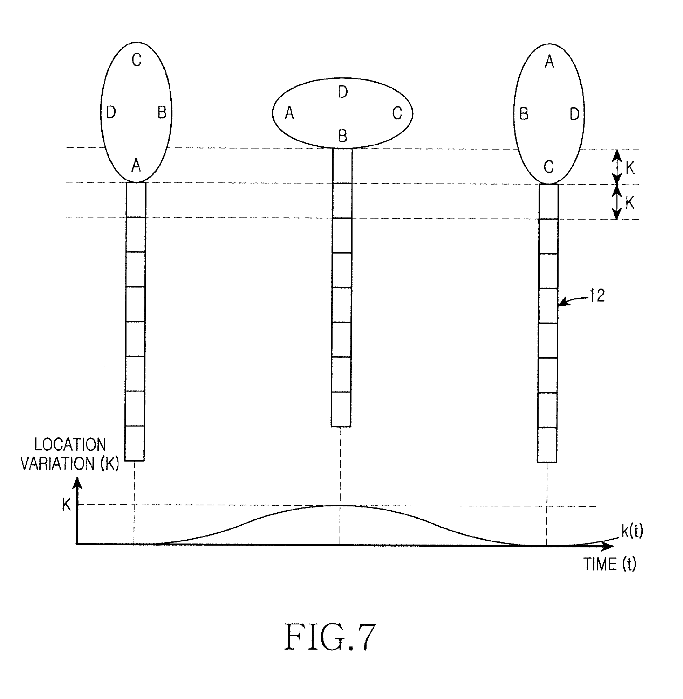

FIG. 7 is a graph illustrating location variation of the image sensor 12 according to the rotation of the driving cam 182 shown in FIG. 4. For convenience of description, location variation of the image sensor 12 as a function of time "t" is shown as function "k(t)". In this case, function "k(t)" may be defined according to the shape and rotation speed of the elliptical driving cam 182.

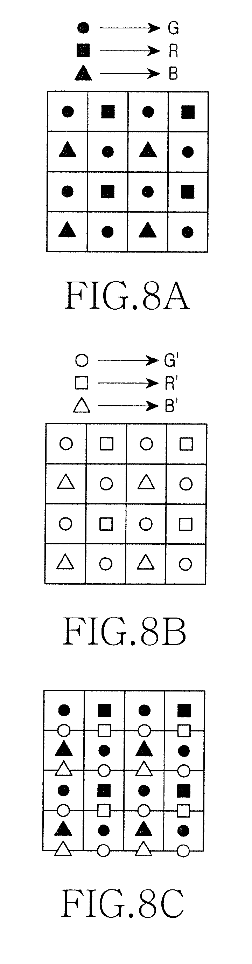

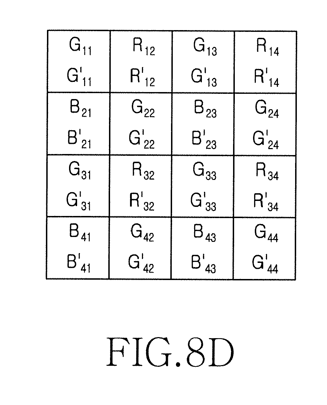

FIGs. 8A, 8B, 8C, and 8D are conceptual views illustrating spatial relation between image data and arrangement of Bayer-format data, when two 5 sheets (i.e., two frames) of image data have been consecutively acquired. FIG. 8A shows Bayer-format data acquired at "k(t)=0", and FIG. 8B shows Bayer-format data acquired at "k(t)=K/2". The location of the image sensor 12 Bayer-format data of FIG. 8A is half-pixel higher than the location of the image sensor 12 Bayer-format data of FIG. 8B. According to the present invention, whenever one sheet (i.e., one frame) of image data is to be converted from single color pixel data to three color pixel data at least two sheets of image data are acquired as described above. That is, according to the characteristics of the present invention, auxiliary image data as shown in FIG. 8B are acquired in addition to primary image data as shown in FIG. 8A.

The image data acquired as shown in FIGs. 8A and 8B can be regarded as having a spatial relation as shown in FIG. 8C due to location variation of the image sensor 12. FIG. 8D shows color information of R, G, and B according to each position of FIG. 8C. According to the conventional bilinear color interpolation, for example, when G23 is to be determined , G values (i.e., G13, G22, G24, and G33) located nearest to the G23 are used for reference as described with reference to Equation. 1. However, when there are different information at half-pixel positions, it means that there is different color information (e.g., G'13) nearer to the G23. Therefore, according to the present invention, when the color at G23 is to be determined, more surrounding color information can be used to calculate the color value at position G23 than that used in the conventional manner. Equation 5 represents one exemplary method for calculating color value at position G23, and shows a general expression to assign weights in inverse proportion to a distance.

$$G_{23} = \frac{k(t)}{K} \times G'_{13} + \frac{(K - k(t))}{K} \times \frac{G_{13} + G_{22} + G_{24} + G_{33}}{4} \quad \dots\dots\dots\dots (5)$$

Referring to FIG. 5, it can be understood that an average value of those pixels (i.e., G13, G22, G24, and G33) located near to the G23 according to the conventional bilinear color interpolation, and the value of G'13 located nearest to the G23 from auxiliary image data according to the characteristics of the present invention are used to calculate the value at position G23. In this case, weights are assigned to the G'13 and the average value of the G13, G22, G24, and G33. When weight "k(t)/K" for the G'13 and weight "(K-k(t))/K" for the average value of the G13, G22, G24, and G33 are expressed to "Wa" and "Wb", respectively, the "Wa" and "Wb" are defined by following conditions.

1) The total sum of weights is one : Wa + Wb = 1.
2) Each Weight has a value greater than zero : 0 < Wa ≤ 1, 0 < Wb ≤ 1.
3) Each Weight is inversely proportional to a distance away from a reference position (K). That is, each weight is proportional to "k(t)".

$$Wa = k(t)x, \ Wb = Ky \ (\text{herein, "x" and "y" are control variables}).$$

According to condition 1, k(t)x + Ky =1.
For "y", it is concluded that y = (1- k(t)x)/K.
Herein, "Wa" must have a value equal to or less than one according to condition 2. Therefore, when "x=1/K" is defined, y = (1- k(t)x)/K = (K-k(t))/K$^2$.
Accordingly, Wb = Ky = (K-k(t))/K, Wa = k(t)/K.
The following Equations 6 and 7 are expressions for calculating R23 and R22 with weights assigned according to each distance.

$$R_{23} = \frac{\bar{k}(t)}{K} \times \left(\frac{\bar{R'_{12}} + R'_{14}}{2}\right) + \frac{(K - \bar{k}(t))}{K} \times \frac{R_{12} + R_{14} + R_{32} + R_{34}}{4} \quad \dots\dots (6)$$

$$R_{22} = \frac{k(t)}{K} \times R'_{12} + \frac{(K - k(t))}{K} \times \frac{(R_{12} + R_{32})}{2} \quad \dots\dots\dots\dots (7)$$

Referring to Equation 6, it can be understood that R23 is calculated by assigning weights based on corresponding distances, based on an average value of pixels (i.e., R12, R14, R32, and R34) located near to the R23, and R'12 and R'14 located near to the R23 from among auxiliary image data acquired according to the characteristics of the present invention. Similarly, R23 is calculated by using R12 and R32 from among the primary image data and R'12 from among the auxiliary image data. Meanwhile, since the R33 has R32 and R34 at the right and left sides thereof as the nearest surrounding color values and have no nearer color value in the second image, the R33 is processed in the same manner as the conventional manner. B32 and B33 are calculated in the same interpolation as that used to calculate color "R". The following Equations 8 and 9 are expressions for calculating B32 and B33, respectively.

$$B_{32} = \frac{k(t)}{K} \times \left(\frac{B'_{21} + B'_{23}}{2}\right) + \frac{(K - k(t))}{K} \times \frac{B_{21} + B_{23} + B_{41} + B_{43}}{4} \quad \dots\dots (8)$$

$$B_{33} = \frac{k(t)}{K} \times B'_{23} + \frac{(K - k(t))}{K} \times \frac{(B_{23} + B_{43})}{2} \quad \dots\dots\dots\dots\dots\dots\dots (9)$$

Meanwhile, as an example of Equation 5, when the first image is acquired at "k(t)=0" and the second image is acquired at "k(t)=K/2", G23 is calculated by Equation 10. Referring to Equation 10, since the weight for G'13 is equal to the weight for an average value of G13, G22, G24, and G33, the "K" is eliminated, so that G23 becomes a mean value of the G'13 and the average value of G13, G22, G24, and G33.

$$G_{23} = \frac{4G'_{13} + G_{13} + G_{22} + G_{24} + G_{33}}{8} \quad \dots\dots\dots\dots\dots\dots\dots (10)$$

As another example of Equation 5, when the first image is acquired at "k(t)=0" and the second image is acquired at "k(t)=K", G23 is calculated by Equation 11. As expressed in Equation 11, G23 of the first image is located at the same position as G'13 of the second image. Therefore, the value of the G'13 can be used as the value of the G23, without calculation of the G23 using surrounding G values near to the G23. This represents that "G" color information exists in every pixel position, which means that color interpolation for "G" color information is unnecessary. Accordingly, it is possible to remove problems, such as an image blurring phenomenon, which are caused by color interpolation.

$$G_{23} = G'_{13} \quad \dots\dots\dots\dots\dots\dots\dots\dots\dots\dots\dots\dots\dots\dots (11)$$

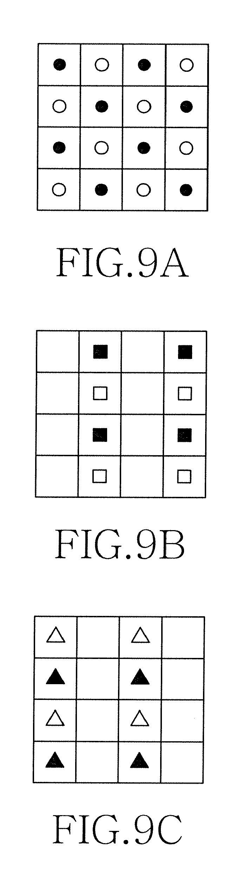

FIGs. 9A, 9B, and 9C are views illustrating examples in which each piece of color information obtained through the image sensor is expressed according to positions when the first image is acquired at "k(t)=0" and the second image is acquired at "k(t)=K". Referring to FIG. 9A, which expresses information about color "G", it can be understood that color "G" exists in every pixel. It has been discovered that color "G" includes more information than color "R" and color "B", and particularly, includes a great deal of brightness information. Therefore, color "G" is often used for reference even upon color interpolation for color "R" and "B" in the conventional color interpolation, and also is relatively more used upon construction of a color filter for a sensor. According to the present invention as described above, it is possible to acquire colors representative of the real colors, even without performing color interpolation with respect to color "G". FIG. 9B is a view illustrating an example in which the components of color "R" in the two images are expressed together in one image, and FIG. 9C is a view illustrating an example in which the components of color "B" in the two images are expressed together in one image. Referring to FIGs. 9A and 9B, it can be understood that color "R" and color "B" are alternatively filled in the image in the up and down direction.

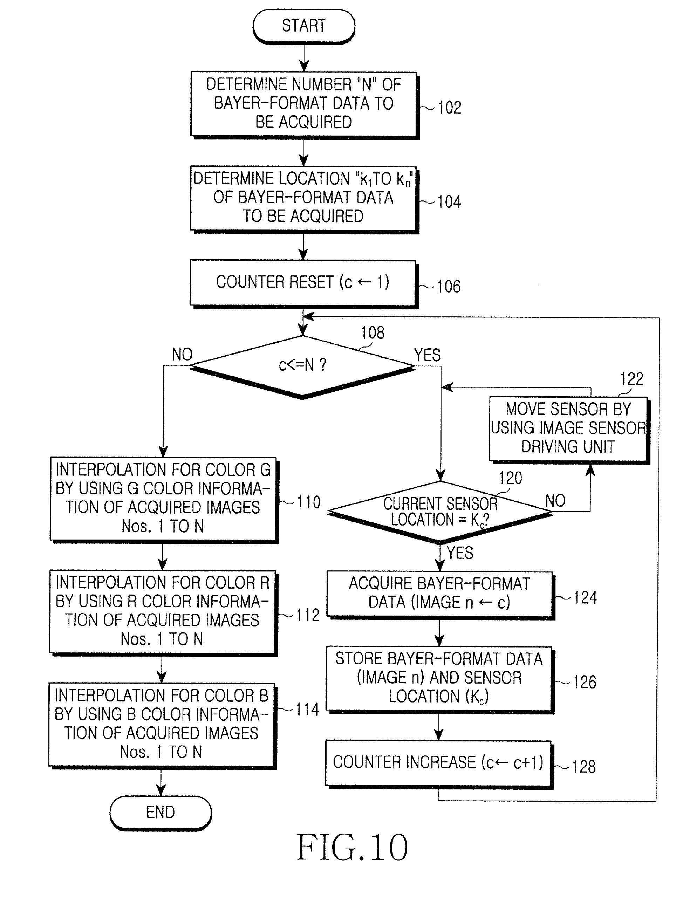

FIG. 10 is a flowchart illustrating an entire operation for color interpolation in a digital photographing device according to an embodiment of the present invention, wherein it is shown that N pieces of Bayer-format data are acquired, and one image is obtained by using the N pieces of Bayer-format data. First, the number of pieces (e.g., N pieces) of Bayer-format data to be acquired is determined, (step 102), and then locations of the image sensor at which each piece of the Bayer-format data are to be acquired are determined based on the determined number of pieces of Bayer-format data. Thereafter, pieces of Bayer-format data as many as the determined number are acquired by means of a counter. In detail, the counter is reset to one (c ← 1) in step 106, and then it is determined in step 108 if the value of the counter exceeds the determined value. When it is determined that the value of the counter does not exceed the determined value, pieces of Bayer-format data are continually acquired in steps 120 to 128.

According to the data acquisition operation, first, it is checked if the image sensor is currently located at a position corresponding to a piece of Bayer-format data to be acquired at this time (step 120). When the image sensor is currently located at the position corresponding to the piece of Bayer-format data to be acquired at this time, the piece of Bayer-format data is acquired in step 124. Then, in step 126, the acquired piece of Bayer-format data is stored, together with sensor location information to be used when a color value is calculated in the future. Thereafter, the counter increases by one in step 128, and the operation returns to step 108, thereby repeating the above-mentioned steps. Meanwhile, when it is determined in step 120 that the image sensor is not currently located at the position corresponding to the piece of Bayer-format data to be acquired at this time, a process for moving the image sensor to the corresponding position is performed by using the sensor movement driving unit (step 122).

Meanwhile, when it is determined in step 108 that the value of the counter exceeds the determined value, a color interposition operation for each color is performed by using the acquired Bayer-format data (steps 110 to 114). In detail, a color interpolation operation for color "G" is performed by using Equation 5 (step 110), a color interpolation operation for color "R" is performed by using Equations 6 and 7 (step 112), and a color interpolation operation for color "B" is performed by using Equations 8 and 9 (step 114).

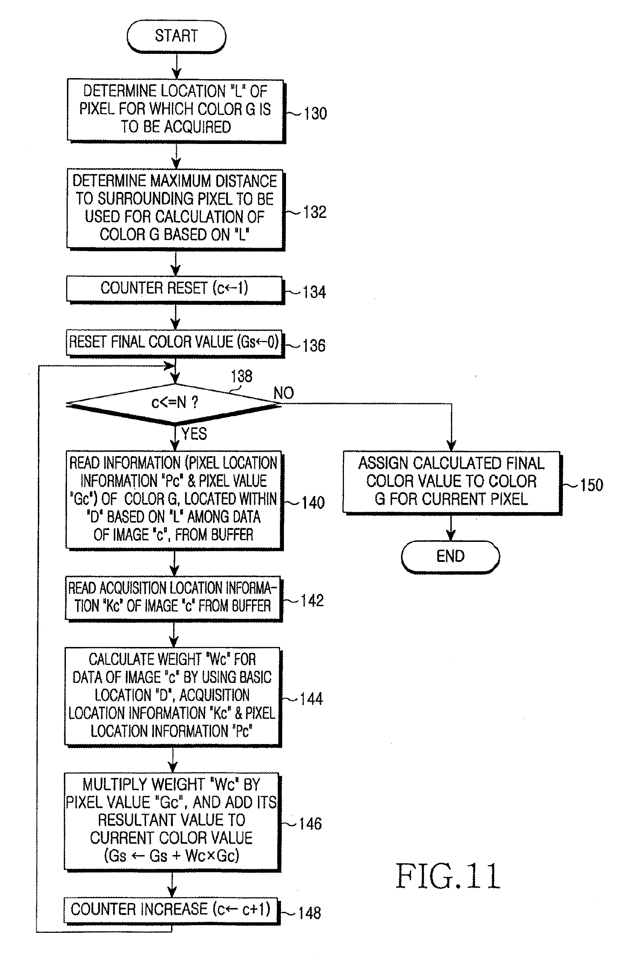

FIG. 11 is a detailed flowchart illustrating a color interpolation operation for color "G" of a specific position in FIG. 10. First, the location "L" of a pixel being currently processed in an image is identified in step 130, and then a maximum distance "D" for determining locations of colors for reference around the pixel is determined in step 132. Thereafter, each variable is initialized. That is, a counter is reset to one (c ← 1) in step 134, and then a final color value "GS" is reset to zero.

Next, it is determined if the value of the counter exceeds the corresponding number "N" of images (step 138). When the value of the counter does not exceed the number "N" of images, a mean of values of colors reference in corresponding Bayer-format data is multiplied by a corresponding weight, which is inversely proportional to a distance away from a pixel being currently processed. This is repeated by the number of acquired Bayer-format data, thereby determining final color "G" in which values of surrounding colors are reflected (steps 140 to 148).

That is, information about "G" colors(i.e., pixel location information "Pc" and a pixel value "Gc"), which are spaced by distance "D" from the location "L" of the corresponding pixel, from among data of a current image "c" is read from a buffer in step 140. Next, current-image acquisition location information, i.e., image sensor location information, "Kc" is read from the buffer in step 142. Then, a weight "Wc" for current image data is calculated by using the basic location "D", the current-image acquisition location information "Kc", and the pixel location information "Pc" in step 144. Next, the calculated weight "Wc" is multiplied by a corresponding pixel value "Gc", and a value obtained from the multiplication is added to a current final color value "Gs" in step 146. Thereafter, the counter increases by one in step 148, and then the operation returns to step 138, thereby repeating the above-mentioned steps.

Meanwhile, when it is determined in step 138 that the value of the counter exceeds the corresponding number "N" of images, step 150 is performed. In step 150, the calculated final color value "Gs" is assigned to color "G" for the current pixel.

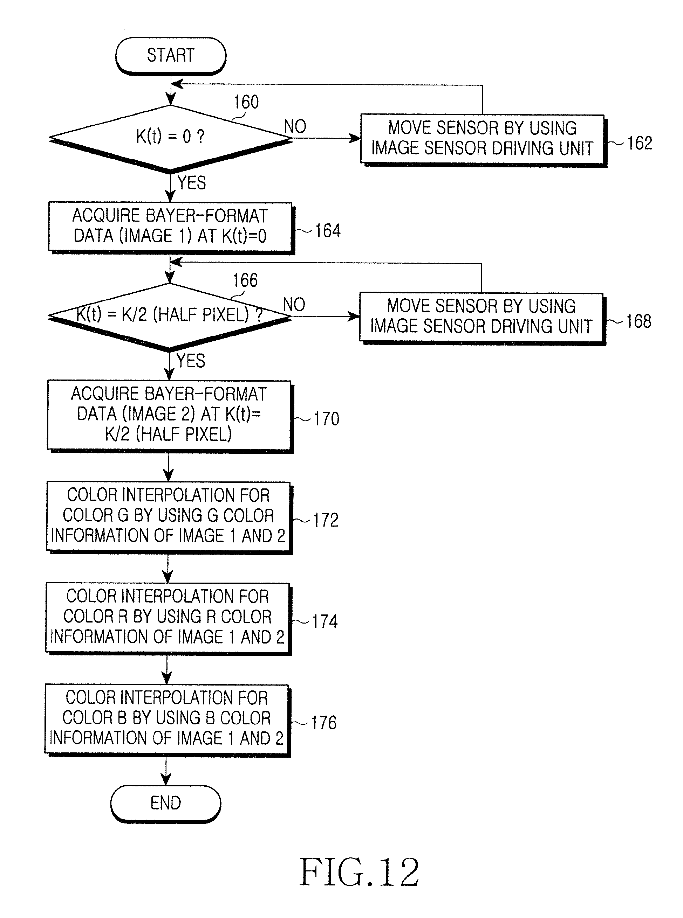

FIG. 12 is a flowchart illustrating an entire color interpolation operation in a digital photographing device according to another embodiment of the present invention. That is, FIG. 12 shows a color interpolation method when the first image is acquired at "k(t)=0" and the second image is acquired at "k(t)=K/2". First, it is determined if the location of the image sensor corresponds to "k(t)=0" in order to acquire the first image (step 160). When it is determined that the location of the image sensor does not correspond to "k(t)=0", the sensor movement controller makes the sensor movement driving unit move the image sensor while checking the location of the image sensor so that the location of the image sensor can correspond to "k(t)=0" (step 162). When the location of the image sensor 12 corresponds to "k(t)=0" the first Bayer-format image is acquired at the current location of the image sensor.

Next, it is determined if the location of the image sensor corresponds to "k(t)=K/2", which is a half-pixel unit distance, in order to acquire the second image (step 166). When it is determined that the location of the image sensor does not correspond to "k(t)=K/2", the sensor movement controller makes the sensor movement driving unit move the image sensor so that the location of the image sensor can correspond to "k(t)= K/2" (step 168). Then, the second image is acquired at the current location of the image sensor in step 170.

Thereafter, color interpolation for color "G" is performed by using the acquired first and second images (step 172), and then color interpolation for colors "R" and "B" are performed in steps 174 and 176, respectively. The color interpolation method for color "G" may be performed based on Equation 10.

As described above, the color interpolation method in a digital photographing device according to the present invention acquires two or more sheets of Bayer-format data while changing the location of the image sensor in the digital photographing device, and calculates an image using two pieces of color information\, thereby providing a method which can acquire values of colors representative of the actual colors. Particularly, according to present invention, when the values of colors in two or more sheets of Bayer-format data are reflected in the color interpolation, weights inversely proportional to each corresponding distance are used, so that it is possible to solve various problems which may occur upon color interpolation, and to acquire a more definite image than the conventional interpolation method.

The above-described methods according to the present invention can be realized in hardware or as software or computer code that can be stored in a recording medium such as a CD ROM, an RAM, a floppy disk, a hard disk, or a magneto-optical disk or downloaded over a network, so that the methods described herein can be rendered in such software using a general purpose computer, or a special processor or in programmable or dedicated hardware, such as an ASIC or FPGA. As would be understood in the art, the computer, the processor or the programmable hardware include memory components, e.g., RAM, ROM, Flash, etc. that may store or receive software or computer code that when accessed and executed by the computer, processor or hardware implement the processing methods described herein.

While the present invention has been shown and described with reference to certain preferred embodiments of a color interpolation method in a digital photographing device, it will be understood by those skilled in the art that various changes in form and details may be made therein without departing from the spirit and scope of the invention as defined by the appended claims. For example, while the present invention has been described with respect to an example in which the sensor movement driving unit to move the image sensor has a cam structure, the sensor movement driving unit may have various structures such as a rack-pinion structure or structure using a linear motor. Also, the present invention has been described with respect to an example in which the present invention is applied to the Bayer format, the present invention may be also applied to a CMYG format and the like. Accordingly, the scope of the invention is not to be limited by the above embodiments but by the claims and the equivalents thereof.

**Claims**

1. An apparatus for color interpolation in a digital photographing device, the apparatus comprising:

    an optical unit (10) including a lens and a lens adjuster so as to receive an optical signal;
    an image sensor (12) installed to be movable in a predetermined direction, wherein the image sensor (12) converts the optical signal input through the optical unit (10) into a digital signal, in order to obtain raw data based on a unit of a frame, the raw data including color information about one color of each pixel according to a color filter array (CFA) of a predetermined format;
    a buffer (14) for storing the raw data obtained by the image sensor (12);
    a sensor movement controller (17) for controlling a movement state and a movement distance of the image sensor (12) so as to obtain at least two frames of raw data, one of which has an offset from one image through the image sensor (12), when said one image is photographed;
    a sensor movement driving unit (18) for moving the image sensor (12) under a control of the sensor movement controller (17); and
    an image processing unit (16) for converting said at least two frames of raw data stored in the buffer into image data, which have a plurality of pieces of color information predetermined to enable expression of an original color for each pixel, by using color interpolation.

2. The apparatus as claimed in claim 1, wherein, in order to move the image sensor (12) in up and down directions or in right and left directions, the apparatus comprises:

    an elliptical driving cam (182) contacting an up/down surface or right/left surface of the image sensor (12);
    a driving motor (184) for rotating the driving cam (182); and
    a spring for providing elastic force to a surface of the image sensor, which is located opposite to a contact surface between the image sensor (12) and the driving cam (182), so that the image sensor (12) is in tight contact with the driving cam (182).

3. A method for color interpolation in a digital photographing device, the method comprising the steps of:

    acquiring one basic image data and one auxiliary image data which has an offset by a predetermined distance from the basic image data; and
    converting the acquired basic and auxiliary image data into image data, which have a plurality of color information predetermined to enable expression of an original color for each pixel, by performing color interpolation.

4. The method as claimed in claim 3, wherein the color interpolation is performed in such a manner that a first mean value of pixel(s) located near to a first pixel to be subjected to the color interpolation in the basic image data is multiplied by a weight inversely proportional to a distance away from the first pixel, and a second mean value of pixel(s) located near to a second pixel to be subjected to the color interpolation in the auxiliary image data is multiplied by a weight inversely proportional to a distance away from the second pixel.

5. The method as claimed in claim 3 or 4, wherein an offset distance of the auxiliary image data from the basic image data corresponds to a half-pixel distance.

6. The method as claimed in claim 3 or 4, wherein an offset distance of the auxiliary image data from the basic image data corresponds to one-pixel distance.

7. The method as claimed in claim 3, wherein:

    acquiring the basic image data includes acquiring first Bayer-format image data by using an image sensor;
    acquiring the auxiliary image data includes acquiring second Bayer-format image data by moving the image sensor by a half pixel in a predetermined direction; and
performing color interpolation includes performing color interpolation for colors "G", "R", and "B" by using the acquired first and second image data.

8. The method as claimed in claim 7, wherein the color interpolation is performed in such a manner that a first mean value of pixels located near a first pixel to be subjected to the color interpolation in the first image data and a second mean value of pixels located near a second pixel to be subjected to the color interpolation in the second image data are averaged.

9. An apparatus for determining a three-color pixel from a single color pixel, the apparatus comprising:

a processor (16) in communication with a memory, the processor executing code for:

receiving single-color data associated with a pixel in a first frame of data;
receiving single-color data associated with the pixel in a second frame of data;
performing a color interpolation using said single-color pixel data from said first and second frame data.

10. An apparatus as claimed in claim 9, wherein said single-color pixel data is in Bayer-format image data.

11. An apparatus as claimed in claim 9 or 10, wherein said color-interpolation is performed by interposing said second frame single-color pixel data within said first frame single-color pixel data.

12. An apparatus as claimed in any one of claims 9 to 11, wherein said first frame and said second frame single-color pixel data is contained in said memory.

13. An apparatus as claimed in any one of claims 9 to 11, further comprising a buffer (14) in communication with said processor (16), said buffer (14) containing said first frame and said second frame single-color pixel data.

14. An apparatus as claimed in claim 13, further comprising an optical sensing device (12) providing said first frame and said second frame single-color pixel data to said buffer (14).

15. The apparatus as claimed in claim 14, further comprising:

an positioning device (17, 18, 182, 184) operable to position said optical sensing device (12) in a known direction.

16. The apparatus as claimed in claim 15, wherein said processor (16) executing code for;
directing said positioning device (17, 18, 182, 184) to position said optical sensing device (12) to a first and a second position within a known time.

17. The apparatus as claimed in any one of claims 9 to 16, wherein said single-color pixel data is associated with a color wavelength is selected from the group consisting of: red, green, blue, cyan, magenta, and yellow.

18. The apparatus as claimed in any one of claims 9 to 17, wherein said processor (16) performs said color interpolation by executing code for:

determining a first mean value of pixels located near to a first pixel in said first data frame is multiplied by a weight inversely proportional to a distance away from the first pixel, and
determining a second mean value of pixels located near to a second pixel the second data frame is multiplied by a weight inversely proportional to a distance away from the second pixel.

19. The apparatus as claimed in claim 14 or any one of claims 9 to 13 or 15 to 18 in combination with claim 14, wherein said optical sensing device is selected from the group consisting of: CCD and CIS.

20. The apparatus as claimed in claim 15, wherein said positioning device (17, 18, 182, 184) comprises a cam assembly (182).

21. The apparatus as claimed in claim 20, wherein said cam assembly (182) comprises:

an elliptical cam (182) having a first axis longer than a second axis.

**22.** The apparatus as claimed in claim 15 or 16, configured for color interpolation in a digital photographing device, further comprising:

an optical unit (10) including a lens and a lens adjuster so as to receive an optical signal,

a sensor movement controller (17) for controlling a movement state and a movement distance of the image sensor (12) so as to obtain at least two frames of raw data, one of which has an offset from one image through the image sensor (12), when said one image is photographed, and

a sensor movement driving unit (18) for moving the image sensor (12) under a control of the sensor movement controller (17), wherein

the optical sensing device (12) is an image sensor (12) installed to be movable in a predetermined direction, wherein the image sensor (12) converts the optical signal input through the optical unit (10) into a digital signal, in order to obtain raw data based on a unit of a frame, the raw data including color information about one color of each pixel according to a color filter array (CFA) of a predetermined format, and

the processor (16) is an image processing unit (16) for converting said at least two frames of raw data stored in the buffer into image data, which have a plurality of pieces of color information predetermined to enable expression of an original color for each pixel, by using color interpolation.

| G | R | G | R |
|---|---|---|---|
| B | G | B | G |
| G | R | G | R |
| B | G | B | G |

## FIG.1

| $R_{11}$ | $R_{12}$ | $R_{13}$ | $R_{14}$ |
|---|---|---|---|
| $R_{21}$ | $R_{22}$ | $R_{23}$ | $R_{24}$ |
| $R_{31}$ | $R_{32}$ | $R_{33}$ | $R_{34}$ |
| $R_{41}$ | $R_{42}$ | $R_{43}$ | $R_{44}$ |

| $G_{11}$ | $R_{12}$ | $G_{13}$ | $R_{14}$ |
|---|---|---|---|
| $B_{21}$ | $G_{22}$ | $B_{23}$ | $G_{24}$ |
| $G_{31}$ | $R_{32}$ | $G_{33}$ | $R_{34}$ |
| $B_{41}$ | $G_{42}$ | $B_{43}$ | $G_{44}$ |

| $G_{11}$ | $G_{12}$ | $G_{13}$ | $G_{14}$ |
|---|---|---|---|
| $G_{21}$ | $G_{22}$ | $G_{23}$ | $G_{24}$ |
| $G_{31}$ | $G_{32}$ | $G_{33}$ | $G_{34}$ |
| $G_{41}$ | $G_{42}$ | $G_{43}$ | $G_{44}$ |

| $B_{11}$ | $B_{12}$ | $B_{13}$ | $B_{14}$ |
|---|---|---|---|
| $B_{21}$ | $B_{22}$ | $B_{23}$ | $B_{24}$ |
| $B_{31}$ | $B_{32}$ | $B_{33}$ | $B_{34}$ |
| $B_{41}$ | $B_{42}$ | $B_{43}$ | $B_{44}$ |

## FIG.2

FIG.3

FIG.4

FIG.5

EP 1 883 248 A2

FIG.6

FIG.7

FIG.8A

FIG.8B

FIG.8C

| $G_{11}$ $G'_{11}$ | $R_{12}$ $R'_{12}$ | $G_{13}$ $G'_{13}$ | $R_{14}$ $R'_{14}$ |
|---|---|---|---|
| $B_{21}$ $B'_{21}$ | $G_{22}$ $G'_{22}$ | $B_{23}$ $B'_{23}$ | $G_{24}$ $G'_{24}$ |
| $G_{31}$ $G'_{31}$ | $R_{32}$ $R'_{32}$ | $G_{33}$ $G'_{33}$ | $R_{34}$ $R'_{34}$ |
| $B_{41}$ $B'_{41}$ | $G_{42}$ $G'_{42}$ | $B_{43}$ $B'_{43}$ | $G_{44}$ $G'_{44}$ |

# FIG.8D

FIG.9A

FIG.9B

FIG.9C

START

DETERMINE NUMBER "N" OF BAYER-FORMAT DATA TO BE ACQUIRED — 102

DETERMINE LOCATION "$k_1$ TO $k_n$" OF BAYER-FORMAT DATA TO BE ACQUIRED — 104

COUNTER RESET (c ← 1) — 106

108
c<=N ?

NO → INTERPOLATION FOR COLOR G BY USING G COLOR INFORMATION OF ACQUIRED IMAGES Nos. 1 TO N — 110

INTERPOLATION FOR COLOR R BY USING R COLOR INFORMATION OF ACQUIRED IMAGES Nos. 1 TO N — 112

INTERPOLATION FOR COLOR B BY USING B COLOR INFORMATION OF ACQUIRED IMAGES Nos. 1 TO N — 114

END

YES → 120 CURRENT SENSOR LOCATION = $K_c$?

NO → MOVE SENSOR BY USING IMAGE SENSOR DRIVING UNIT — 122

YES → ACQUIRE BAYER-FORMAT DATA (IMAGE n ← c) — 124

STORE BAYER-FORMAT DATA (IMAGE n) AND SENSOR LOCATION ($K_c$) — 126

COUNTER INCREASE (c ← c+1) — 128

FIG.10

START

DETERMINE LOCATION "L" OF PIXEL FOR WHICH COLOR G IS TO BE ACQUIRED ~130

DETERMINE MAXIMUM DISTANCE TO SURROUNDING PIXEL TO BE USED FOR CALCULATION OF COLOR G BASED ON "L" ~132

COUNTER RESET (c←1) ~134

RESET FINAL COLOR VALUE (Gs←0) ~136

138

c<=N ?

NO → ASSIGN CALCULATED FINAL COLOR VALUE TO COLOR G FOR CURRENT PIXEL ~150

END

YES

READ INFORMATION (PIXEL LOCATION INFORMATION "Pc" & PIXEL VALUE "Gc") OF COLOR G, LOCATED WITHIN "D" BASED ON "L" AMONG DATA OF IMAGE "c", FROM BUFFER ~140

READ ACQUISITION LOCATION INFORMA-TION "Kc" OF IMAGE "c" FROM BUFFER ~142

CALCULATE WEIGHT "Wc" FOR DATA OF IMAGE "c" BY USING BASIC LOCATION "D", ACQUISITION LOCATION INFORMATION "Kc" & PIXEL LOCATION INFORMATION "Pc" ~144

MULTIPLY WEIGHT "Wc" BY PIXEL VALUE "Gc", AND ADD ITS RESULTANT VALUE TO CURRENT COLOR VALUE (Gs ← Gs + Wc×Gc) ~146

COUNTER INCREASE (c← c+1) ~148

FIG.11

START

K(t) = 0 ? ~160 NO → MOVE SENSOR BY USING IMAGE SENSOR DRIVING UNIT ~162

YES

ACQUIRE BAYER-FORMAT DATA (IMAGE 1) AT K(t)=0 ~164

K(t) = K/2 (HALF PIXEL) ? ~166 NO → MOVE SENSOR BY USING IMAGE SENSOR DRIVING UNIT ~168

YES

ACQUIRE BAYER-FORMAT DATA (IMAGE 2) AT K(t)= K/2 (HALF PIXEL) ~170

COLOR INTERPOLATION FOR COLOR G BY USING G COLOR INFORMATION OF IMAGE 1 AND 2 ~172

COLOR INTERPOLATION FOR COLOR R BY USING R COLOR INFORMATION OF IMAGE 1 AND 2 ~174

COLOR INTERPOLATION FOR COLOR B BY USING B COLOR INFORMATION OF IMAGE 1 AND 2 ~176

END

FIG.12